**Europäisches Patentamt**

**European Patent Office**

**Office européen des brevets**

(11) Veröffentlichungsnummer: **0 178 373**
**B1**

(12) **EUROPÄISCHE PATENTSCHRIFT**

(45) Veröffentlichungstag der Patentschrift:
15.11.89

(21) Anmeldenummer: **85104165.7**

(22) Anmeldetag: **04.04.85**

(51) Int. Cl.⁴: **G 02 B 6/00,** G 02 B 6/44

(54) Schutzhülle für mindestens einen Lichtwellenleiter.

(30) Priorität: **12.10.84 DE 3437551**

(43) Veröffentlichungstag der Anmeldung:
**23.04.86 Patentblatt 86/17**

(45) Bekanntmachung des Hinweises auf die Patenterteilung:
**15.11.89 Patentblatt 89/46**

(84) Benannte Vertragsstaaten:
**AT BE CH DE FR GB IT LI NL SE**

(56) Entgegenhaltungen:
**EP-A-0 151 743**
**DE-A-2 741 153**
**DE-A-3 219 455**
**FR-A-2 295 439**
**GB-A-2 018 459**
**US-A-4 330 173**

(73) Patentinhaber: **Siemens Aktiengesellschaft,**
**Wittelsbacherplatz 2, D-8000 München 2 (DE)**

㉒ Erfinder **Mayr, Ernst, Wernbergstrasse 5, D-8031**
**Starnberg (DE)**
Erfinder **Saller, Helmut, Diemensorfer Strasse 8,**
**D-8000 München 71 (DE)**

EP 0 178 373 B1

**Beschreibung**

Die Erfindung betrifft eine Schutzhülle für mindestens einen lose oder gleitfähig darin enthaltenen beschichteten Lichtwellenleiter, die aus einer Innenschicht und aus einer darauf angebrachten Außenschicht besteht.

Aus der DE-OS-2 556 861 ist ein Lichtwellenleiterkabel bekannt, welches eine Schutzhülle aufweist, die aus einer Innenschicht und einer Außenschicht besteht. Zwischen diesen beiden Schichten ist ein Verstärkungsmaterial eingebracht, so daß eine gut haftende Verbindung zwischen der Innenschicht und der Außenschicht nicht herstellbar ist. Die Innenschicht dieser Anordnung kann aus einem Polyvinylchlorid, einem thermoplastischen Elastomer, einem thermoplastischen Polyester, Polypropylen oder einem ähnlichen Werkstoff bestehen. Für die Außenschicht kann Polyvinylchlorid, ein thermoplastisches Elastomer, einem Äthylentetrafluoräthylen-Copolymer, ein Copolymer von Tetrafluoräthylen und Hexafluorpropylen oder ein ähnlicher Werkstoff verwendet werden.

Aus dem DE-GM-8 122 786 ist eine zweischichtige Schutzhülle für einen Lichtwellenleiter bekannt, bei der die Innenschicht aus einem hochmolekularen Polyestergummi und die Außenschicht aus einer kristallisierenden Polyesterschicht besteht, so daß zwischen beiden Schichten eine feste Haftung vorhanden ist. Dabei ist nachteilig, daß Polyestergummi in der notwendigen Menge nicht preiswert zur Verfügung steht.

In der (unter Artikel 54 (3) EPÜ fallenden) EP-A2-0 151 743 ist ein optisches Übertragungselement mit einer zweischichtigen Hülle beschrieben, bei dem die Innenschicht aus einem Aramid, einem Polyäthersulfon oder einem Polycarbonat besteht, während für die Außenschicht ein Material auf Polyesterbasis vorgesehen ist.

Der vorliegenden Erfindung, welche sich auf eine Schutzhülle der eingangs genannten Art bezieht, liegt die Aufgabe zugrunde, eine zweischichtige Schutzhülle derart aufzubauen, daß trotz Verwendung relativ preiswerter und leicht zu verarbeitender Materialien eine fester Verbund zwischen Innenschicht und Außenschicht gewährleistet wird. Gemäß der Erfindung wird dies dadurch erreicht, daß die Innenschicht aus einem Polyätherimid und die Außenschicht aus einem Polyäther oder Polyurethan bzw. einem Copolymer oder Blockpolymer aus diesen Polymeren besteht.

Die Innenschicht aus einem Polyätherimid und die Außenschicht aus Polyäther oder Polyurethan haften fest aneinander, sind als preiswerte Materialien anzusehen und ergeben somit eine Schutzhülle, die sowohl ausreichend längswasserdicht als auch luftdicht ist.

Es ist zweckmäßig, sowohl für die Innenschicht als auch für die Außenschicht hochmolekulare Materialien zu verwenden, für die Innenschicht insbesondere solche mit einem Molgewicht von mindestens 30.000. Dies hat den Vorteil, daß die damit verbundene Schmelzstabilität eine zuverlässige Extrusionstechnik gewährleistet und die Spannungsrißempfindlichkeit reduziert wird.

Bei dem erfindungsgemäßen Lichtwellenleiteraufbau lassen sich alle für die Lichtwellenleiter-Aderfertigung erforderlichen Wanddickenverhältnisse (von der Hybridader bis zum Maxibündel) anfertigen, beispielsweise mit Wandstärken zwischen 0,1 und 2 mm je Schicht. Es können ein oder mehrere Lichtwellenleiter innerhalb der doppelwandigen Hülle untergebracht sein und gefüllte oder ungefüllte Anordnungen verwendet werden.

Die Erfindung wird nachfolgend anhand eines Ausführungsbeispiels näher erläutert, welches ein optisches Übertragungselement im Querschnitt zeigt. Im Inneren einer Schutzhülle SH ist lose (Hohlader) oder gleitfähig (Hybridader, hier nicht dargestellt) mindestens ein Lichtwellenleiter LW angeordnet. Auf dem Lichtwellenleiter LW ist ein Schutzmantel SM, vorzugsweise aus einem Kunststoffmaterial aufgebracht. Die Schutzhülle SH weist eine Außenschicht AS und eine Innenschicht IS auf. Für die Innenschicht IS wird ein Polyätherimid verwendet, während die Außenschicht aus den nachstehend genannten Materialien besteht. Diese Materialien haften fest aneinander (polare, chemisch verwandte Polymere), so daß auch bei Biege- oder Zugbeanspruchungen an der Schutzhülle SH keine Spaltenbildung zwischen der Außenschicht AS und der Innenschicht IS auftritt. Die Herstellung der Schutzhülle SH erfolgt zweckmäßig mittels zweier in Durchlaufrichtung horizontal oder vertikal angeordneter Extruder, wobei der erste Extruder die Innenschicht IS mittels Schlauchreckverfahren bei 260 bis 280°C erzeugt. Die Kalibrierung der Innenschicht IS wird bei gefüllten Lichtwellenleiteradern durch den Außendurchmesser der durch das Extrusionswerkzeug ragenden Füllnadel von innen bewirkt. Die durch diese Füllnadel fließende Füllmasse kühlt die Innenschicht IS unter deren Glasübergangstemperatur von ca. 150°C und bewirkt damit ein Erstarren des Materials. Bei nicht mit einer Füllmasse versehenen Lichtwellenleiteradern, d.h. bei Hohladern wird eine zusätzliche Kühlung vorgenommen, bevor die Außenschicht AS aufgebracht wird.

Durch einen zweiten Extruder wird, ebenfalls mittels Schlauchreckverfahren, die Außenschicht AS auf die noch ca. 150°C heiße Innenschicht IS aufgebracht. Beim Zusammentreffen beider Schichten (Durchmesseranpassung durch Herunterrecken) muß das Material der Außenschicht AS noch oberhalb seines Kristallit-Schmelzbereiches, der je nach verwendetem Material zwischen 180 und 280°C liegt, sein. Eine anschließende Wasserkühlung reduziert die Temperatur der Schutzhülle SH auf Raumtemperatur.

Für die Innenschicht IS sind bevorzugt verwendbar:

| | |
|---|---|
| Polyätherimid | (z. B. "Ultem 1000" der Fa. General |

Electric Co., Pittsfield, US)

Für die Außenschicht AS sind bevorzugt verwendbar:

Polyäther-Blockpolymere (z. B. "Hytrel 6346" und "Hytrel 7246" der Firma E.I. Du Pont de Nemours & Co., Wilmington, US)

Polyurethan (z. B. "Estane 58202" der Firma B.F. Goodrich Chemical Co., Cleveland, US).

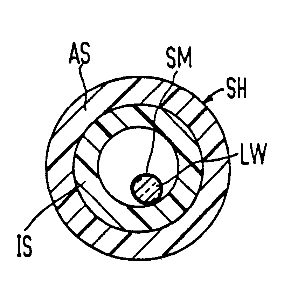

**Patentansprüche**

1. Schutzhülle (SH) für mindestens einen lose oder gleitfähigen darin enthaltenen beschichteten Lichtwellenleiter (LW), die aus einer Innenschicht (IS) und aus einer darauf angebrachten Außenschicht (AS) besteht,
dadurch gekennzeichnet,
daß die Innenschicht (IS) aus einem Polyätherimid und die Außenschicht (AS) aus einem Polyäther oder Polyurethan bzw. einem Copolymer oder Blockpolymer aus diesen Polymeren besteht.

2. Schutzhülle nach Anspruch 1,
dadurch gekennzeichnet,
daß sowohl für die Innenschicht (IS) als auch für die Außenschicht (AS) hochmolekulare Materialien verwendet werden, insbesondere bei der Innenschicht mit einem Molgewicht von mindestens 30.000.

3. Schutzhülle nach einem der vorhergehenden Ansprüche,
dadurch gekennzeichnet,
daß die Wandstärken zwischen 0,1 und 2 mm je Schicht gewählt sind.

**Claims**

1. Protective covering (SH) for at least one coated optical waveguide (LW) which is loosely or slideably contained therein and consists of an inner layer (IS) and an outer layer (AS) applied thereupon, characterized in that the inner layer (IS) consists of a polyether imide and the outer layer (AS) consists of a polyether or polyurethane or else a copolymer or block polymer of these polymers.

2. Protective covering according to Claim 1, characterized in that materials of high molecular weight are used both for the inner layer (IS) and for the outer layer (AS), in particular of a molecular weight of at least 30,000 in the case of the inner layer.

3. Protective covering according to one of the preceding claims, characterized in that the wall thicknesses are chosen between 0.1 and 2 mm per layer.

**Revendications**

1. Gaine protectrice (SH) pour au moins un guide d'ondes optiques recouvert (LW), monté de façon lâche ou de manière à pouvoir glisser dans la gaine et constitué par une couche intérieure (IS) et par une couche extérieure (AS) disposées sur la couche intérieure, caractérisée par le fait que la couche intérieure (IS) est formée par un polyétherimide et que la couche extérieure (AS) est formée par un polyéther ou du polyuréthane ou un copolymère ou un polymère séquencé obtenu à partir de ces polymères.

2. Gaine protectrice suivant la revendication 1, caractérisée par le fait qu'on utilise, aussi bien pour la couche intérieure (IS) que pour la couche extérieure (AS), des matériaux de haut poids moléculaire, possédant notamment un poids moléculaire égal à au moins 30 000 dans le cas de la couche intérieure.

3. Gaine protectrice suivant l'une des revendications précédentes, caractérisée par le fait que les épaisseurs de paroi sont choisies entre 0,1 et 2 mm pour chaque couche.